# EUROPEAN PATENT SPECIFICATION

(11) **EP 4 245 196 B1**
(45) Date of publication and mention of the grant of the patent: **29.07.2026**
(21) Application number: 23159804.6
(22) Date of filing: 02.03.2023
(51) Int. Cl.: A47J 43/07, A47J 43/046

(54) **APPLIANCE LID ASSEMBLY**
GERÄTEDECKELANORDNUNG
ENSEMBLE COUVERCLE D'APPAREIL

(30) Priority: 02.03.2022 US 202263315572 P; 27.02.2023 US 202318174914
(43) Date of publication of application: 20.09.2023
(73) Proprietor: Whirlpool Corporation, Benton Harbor, MI 49022 (US)
(72) Inventor: Aditjandra, Antonius K., 21024 Cassinetta di Biandronno (VA) (IT); Arnold, Richard D., 21024 Cassinetta di Biandronno (VA) (IT); Howse, Lynsey A., 21024 Cassinetta di Biandronno (VA) (IT); Kasner, Rebecca K., 21024 Cassinetta di Biandronno (VA) (IT); Mock, Brandon Tyler, 21024 Cassinetta di Biandronno (VA) (IT); Myers, John Jay, 21024 Cassinetta di Biandronno (VA) (IT); Schutte, Nicholas Hill, 21024 Cassinetta di Biandronno (VA) (IT); Wang, Yifan, 21024 Cassinetta di Biandronno (VA) (IT); Kempic, Joy Kathleen, 21024 Cassinetta di Biandronno (VA) (IT)
(74) Representative: PGA S.p.A., Milano, Succursale di Lugano

(56) References cited:
- EP-A1- 3 064 107
- WO-A1-2015/081381
- WO-A1-2020/000048

## Description

### BACKGROUND OF THE DISCLOSURE

The present disclosure generally relates to a lid assembly for an appliance, and more specifically, to a lid assembly having a removable seal member.

<Documents EP3064107A1, WO2015081381A1 and WO2020000048A1 disclose kitchen appliances comprising a cap.

### SUMMARY OF THE DISCLOSURE

A lid assembly according to the invention is disclosed in any one of claims 1-11.

According to an aspect of the present disclosure, a lid assembly includes a body portion with an aperture disposed therethrough. The aperture is defined by a rim portion. A cap member is removeably received on the aperture. The cap member includes a head portion and a sidewall outwardly extending from a lower surface of the head portion to define a receiving well.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1A is a top perspective view of an appliance having a base unit, a jar assembly and a lid assembly;
FIG. 1B is a top perspective view of the appliance of FIG. 1A;
FIG. 2 is a cross-sectional view of the appliance of FIG. 1A taken at line II;
FIG. 3 is a cross-sectional view of the appliance of FIG. 1B taken at line III;
FIG. 4 is an exploded perspective view of a shaft assembly, a knob and a weighted member;
FIG. 5A is a rear perspective view of the weighted member of FIG. 4;
FIG. 5B is a front perspective view of the weighted member of FIG. 5A;
FIG. 5C is a front elevational view of a weighted member;
FIG. 5D is a front elevational view of a weighted member;
FIG. 6 is an assembled perspective view of the shaft assembly, knob and weighted member of FIG. 4;
FIG. 7 is a top perspective view of motor control components for the appliance of FIG. 1A;
FIG. 8 is a top perspective view of the motor control components of FIG. 7 with a front support bracket removed therefrom;
FIG. 9 is a top perspective view of the motor control components of FIG. 8;
FIG. 10 is a top perspective view of the appliance of FIG. 1A with a lid assembly exploded away from the jar assembly;
FIG. 11 is an exploded top perspective view of the lid assembly of FIG. 10;
FIG. 12 is a top perspective view of the appliance of FIG. 10 with a seal member is shown disposed within the jar assembly;
FIG. 13 is a top perspective view of a lid assembly;
FIG. 14 is a fragmentary bottom perspective view of the lid assembly of FIG. 13 with a cap member removed therefrom; and
FIG. 15 is a fragmentary bottom perspective view of the lid assembly of FIG. 13.

The components in the figures are not necessarily to scale, emphasis instead being placed upon illustrating the principles described herein.

### DETAILED DESCRIPTION

The present illustrated embodiments reside primarily in combinations of method steps and apparatus components related to an appliance, and a user interface thereof. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

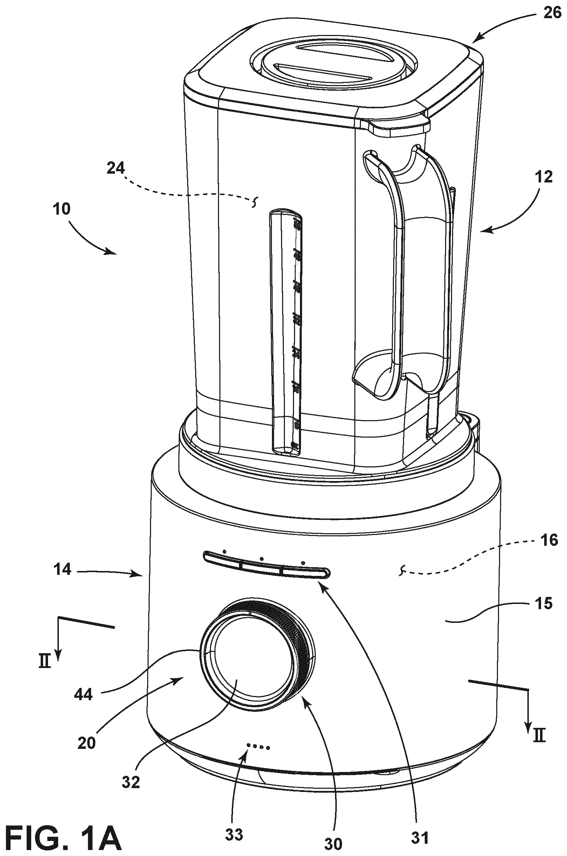

For purposes of description herein, the terms "upper," "lower," "right," "left," "rear," "front," "vertical," "horizontal," and derivatives thereof shall relate to the disclosure as oriented in FIG. 1A. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element preceded by "comprises a..."does not, without more constraints, preclude the existence of additional identical elements in the process, method, article, or apparatus that comprises the element.

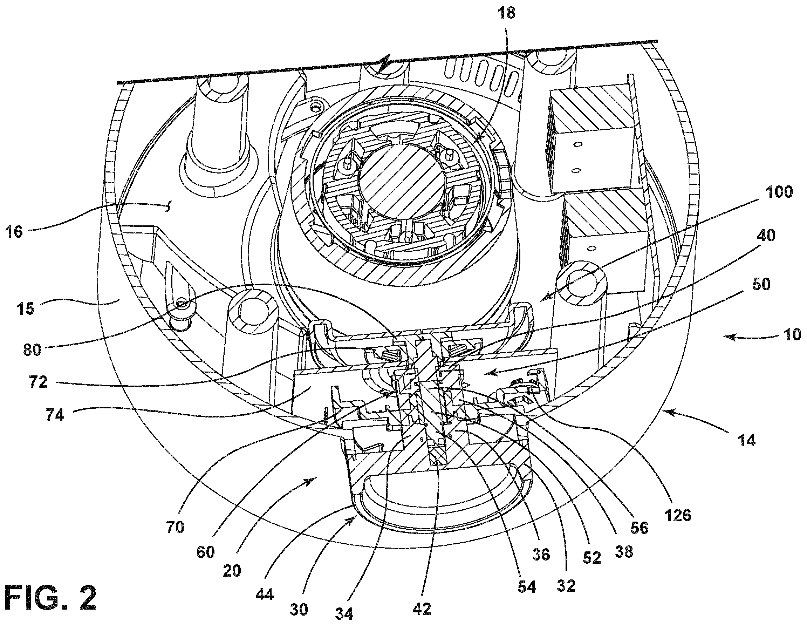

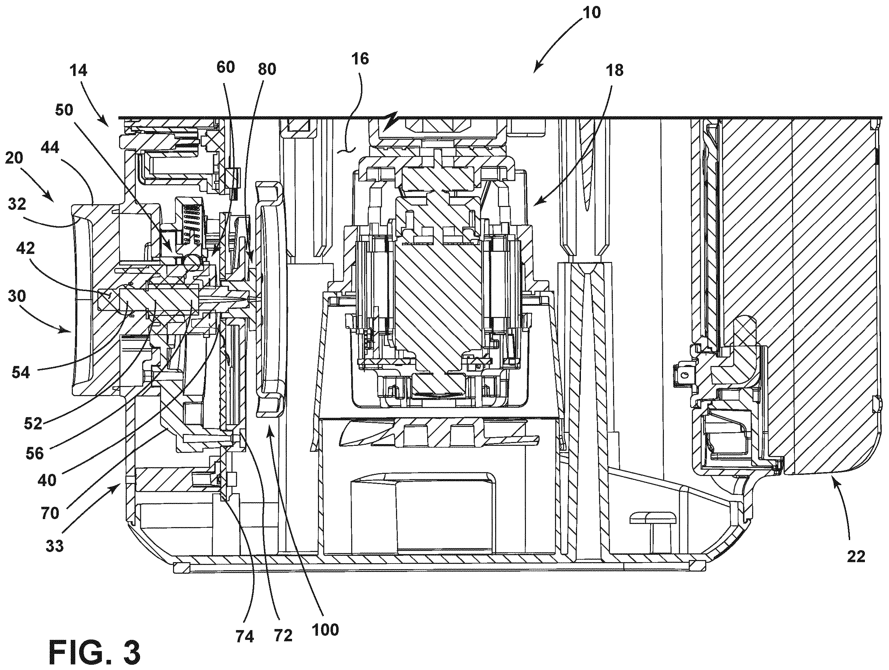

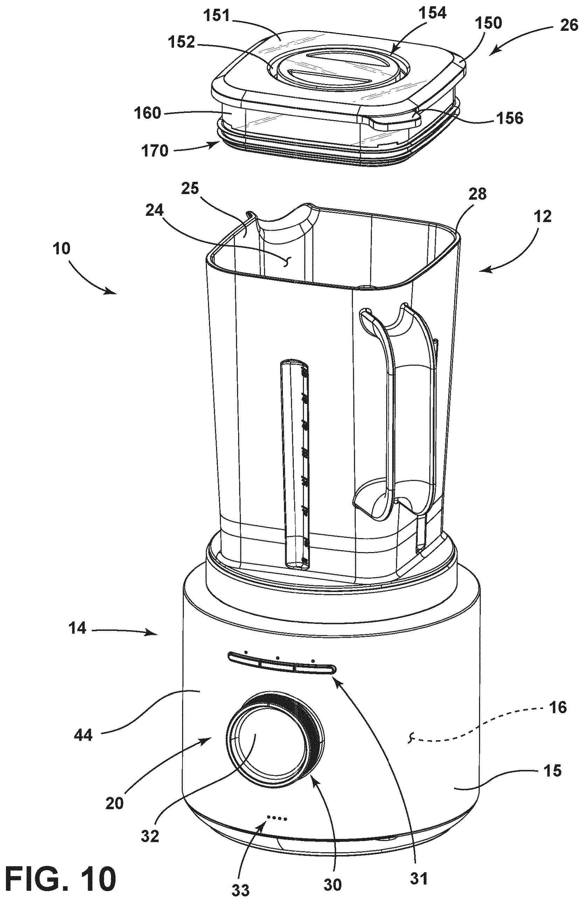

Referring now to FIG. 1A, reference numeral 10 generally designates a small appliance in the form of a blender. The blender 10, as shown in FIG. 1A, includes a jar assembly 12 that is selectively supported on a base unit 14. The jar assembly 12 includes an inner cavity 24 and a lid assembly 26 disposed on an open top 28 (FIG. 10) thereof. The base unit 14 includes a sidewall 15 surrounding an interior cavity 16. A motor 18 (FIGS. 2 and 3) is housed within the interior cavity 16 of the base unit 14. In use, the motor 18 is configured to drive a blade assembly disposed within the inner cavity 24 of the jar assembly 12. As further shown in FIG. 1A, the blender 10 includes a user interface 20 which includes a knob 30 that is contemplated to be electronically coupled to the motor 18, and configured to adjust various settings of the motor 18, as further described below. The user interface 20 further includes a number of function buttons 31 and a power level display 33. The function buttons 31 are contemplated to provide functional settings for the blender 10, such as blade rotational direction and other like functions. The knob 30 of the user interface 20 is contemplated to be rotatably coupled to the base unit 14. The knob 30 includes a head portion 32 that includes an outer diameter 44.

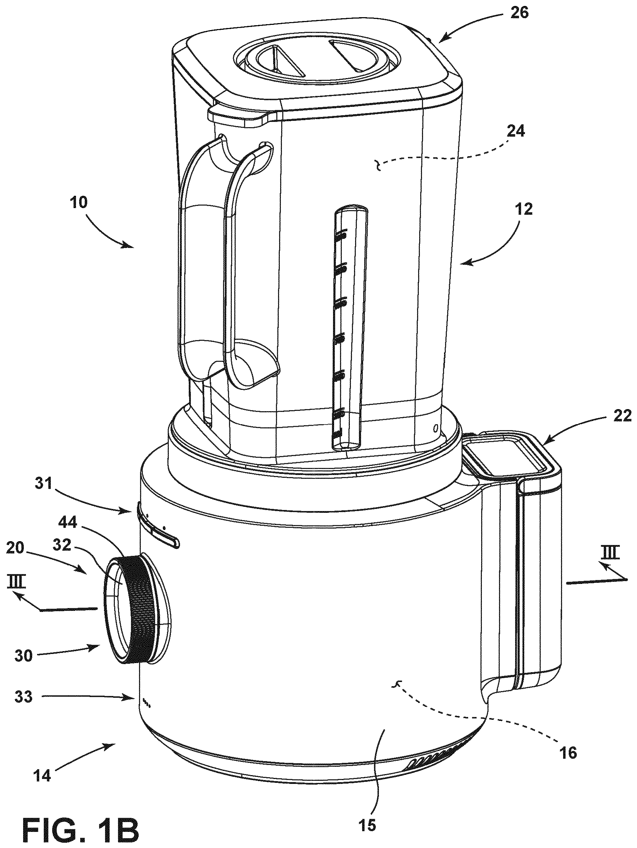

Referring now to FIG. 1B, the blender 10 is contemplated to be a cordless appliance that is powered using a rechargeable power source in the form of a removable battery 22. The battery 22 is disclosed in an application titled CHARGER AND BATTERY FOR CORDLESS APPLIANCE that was filed with the United States Patent and Trademark Office on March 1, 2022 with the Atty Docket No. SUB-15280F-US-PSP The power level display 33 of the user interface 20 is contemplated to provide a visual indicator of the remaining power left in the battery 22.

Referring now to FIG. 2, the knob 30 of the user interface 20 is contemplated to be rotatably coupled to the base unit 14. The knob 30 includes a head portion 32 and a stem portion 34 extending inwardly from the head portion 32. The head portion 32 of the knob 30 is positioned outside of the interior cavity 16 of the base unit 14 and is externally accessible relative to the base unit 14. The head portion 32 of the knob 30 is contemplated to be engaged by a user for selecting a motor speed or other like function of the blender 10. The stem portion 34 includes first and second portions 36, 38, and further includes a distal end 40. The second portion 38 and the distal end 40 of the stem portion 34 are positioned within the interior cavity 16 of the base unit 14. The first portion 36 is positioned outside of the interior cavity 16 of the base unit 14 and is externally accessible relative to the base unit 14. The stem portion 34 further includes an interior channel 42 which defines a hollow portion of the knob 30. As used herein, the term "externally accessible" is meant to describe a component part of the blender 10 that is positioned on an exterior of the blender 10. Specifically, the term "externally accessible" describes component parts that can be engaged by a user on the outside portion of the base unit 14, as opposed to component parts of the blender 10 that are disposed within the interior cavity 16 of the base unit 14.

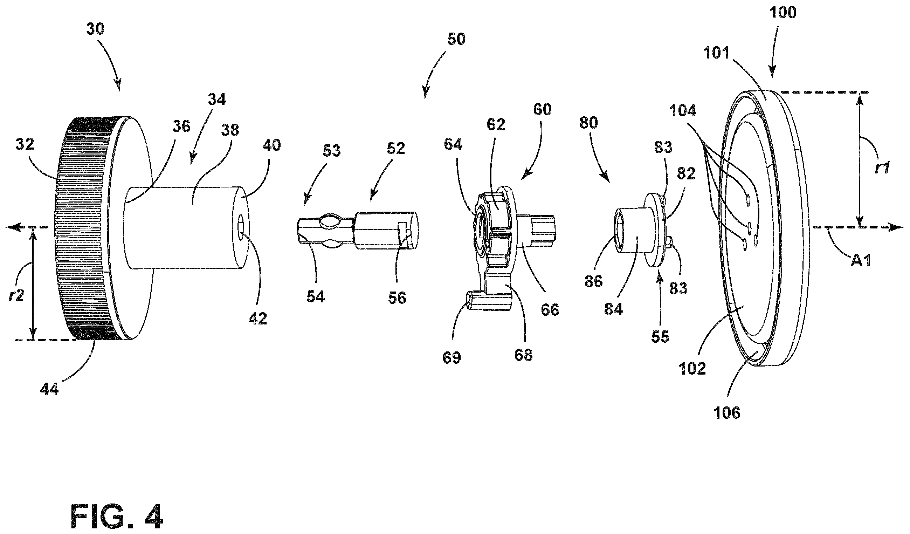

As further shown in FIG. 2, a weighted member 100 is spaced-apart from the knob 30 and operably coupled thereto via a shaft assembly 50. As such, the weighted member 100 is configured for rotation with the shaft assembly 50 and the knob 30. As shown in FIG. 2, the weighted member 100 is positioned within the interior cavity 16 of the base unit 14, while the head portion 32 of the knob 30 is externally accessible relative to the base unit 14. The weighted member 100 provides a sensory experience for a user when the user engages the knob 30 for rotation. Specifically, the weighted member 100 provides an increased moment of inertia or rotational inertia to the rotation of the knob 30 as operably coupled thereto. As used herein, the term "rotational inertia" is meant to indicate the torque needed for a desired angular acceleration about a rotational axis. In the present concept, the rotational axis A1 (FIG. 4) is defined by the shaft assembly 50, such that the rotational inertia (*l*) (provided specifically by the weighted member 100) is equal to the mass (*m*) times the square of the perpendicular distance (*r*) to the axis of rotation A1, which can be expressed as *l* = *mr².*

In the present concept, the knob 30 is contemplated to be comprised of a plastic material that may match the sidewall 15 of the base unit 14, which is also contemplated to be a plastic part. The weighted member 100 is contemplated to be comprised of a metal material to provide a substantial added mass to the shaft assembly 50, thereby increasing the rotational inertia of the knob 30 and the shaft assembly 50. The addition of the weighted member 100 provides a sensory experience to the user that simulates the engagement of a knob that is comprised of metal, or that has the mass of the weighted member 100. As described above, the weighted member 100 is positioned within the interior cavity 16 of the base unit 14, such that the weighted member 100 is concealed within the interior cavity 16 of the base unit 14. In this way, the weighted member 100 may be comprised of a less expensive metal material than a metal material that would be traditionally used for externally accessible knob. Thus, the present concept places mass internal to the base unit 14 of the blender 10 by way of the weighted member 100, which provides a greater opportunity to add mass with geometry optimized for an appropriate moment of inertia to enhance the user experience. The present solution also allows for the knob 30 to be made of materials that are more cost effective than metals, at the same time yielding superior sensorial qualities.

Referring now to FIGS. 2 and 3, the shaft assembly 50 includes a shaft member 52 having first and second ends 54, 56, wherein the second end 56 is positioned within the interior cavity 16 of the base unit 14 and the first end 54 is externally accessible relative to the base unit 14. The first end 54 of the shaft member 52 defines a first portion 53 of the shaft assembly 50. The first end 54 of the shaft member 52 is received within the interior channel 42 of the stem portion 34 of the knob 30 in assembly, such that the shaft member 52 is rigidly coupled to the knob 30 for rotation therewith. As further shown in FIGS. 2 and 3, the shaft assembly 50 also includes a switch assembly 60. The switch assembly 60 is coupled to the second end 56 of the shaft member 52 in a rigid manner for rotation therewith. In use, the switch assembly 60 provides a speed selection for the motor 18 and further provides tactile feedback to the user as a speed selection is made by rotating the knob 30. As further shown in FIGS. 2 and 3, the shaft assembly 50 also includes a mounting bracket 80. In assembly, the mounting bracket 80 interconnects the switch assembly 60 with the weighted member 100. The mounting bracket 80 is rigidly coupled to the switch assembly 60 and the weighted member 100, such that rotation of the knob 30 provides for rotation of the shaft member 52, the switch assembly 60, the mounting bracket 80 and the weighted member 100. As further shown in FIGS. 2 and 3, the shaft assembly 50 is positioned through a number of component parts that do not rotate with the shaft assembly 50. These component parts include a front support bracket 70, a rear support bracket 72 a printed circuit board (PCB) 74.

Referring now to FIG. 4, the switch assembly 60 includes a body portion 62 having an interior channel 64 in which the second end 56 of the shaft member 52 is received to fixedly couple the switch assembly 60 to the shaft member 52. The switch assembly 60 further includes a stem portion 66 that inwardly extends from the body portion 62. The switch assembly 60 further includes an engagement member 68 that radially extends from the body portion 62. The engagement member 68 of the switch assembly 60 further includes an outwardly extending flange 69. The engagement member 68 of the switch assembly 60 is configured to engage a spring for biasing rotational movement of the knob 30, as further described below.

With further reference to FIG. 4, the mounting bracket 80 includes a head portion 82 and a stem portion 84 that outwardly extends from the head portion 82. The head portion 82 of the mounting bracket 80 includes mounting bosses 83 which inwardly extend from the head portion 82 and are configured to be received within mounting apertures 104 centrally disposed on the weighted member 100. The head portion 82 of the mounting bracket 80 defines a second portion 55 of the shaft assembly 50. The stem portion 84 of the mounting bracket 80 includes an interior channel 86 in which the stem portion 66 of the switch assembly 60 is received to fixedly couple the switch assembly 60 to the mounting bracket 80.

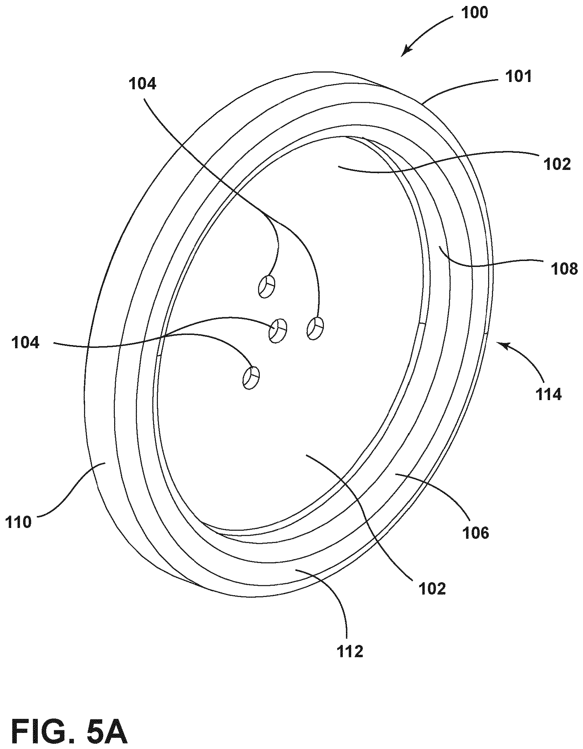

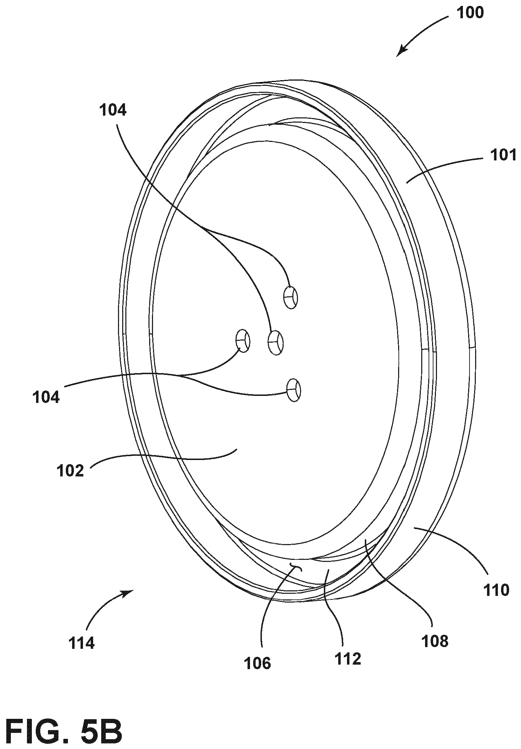

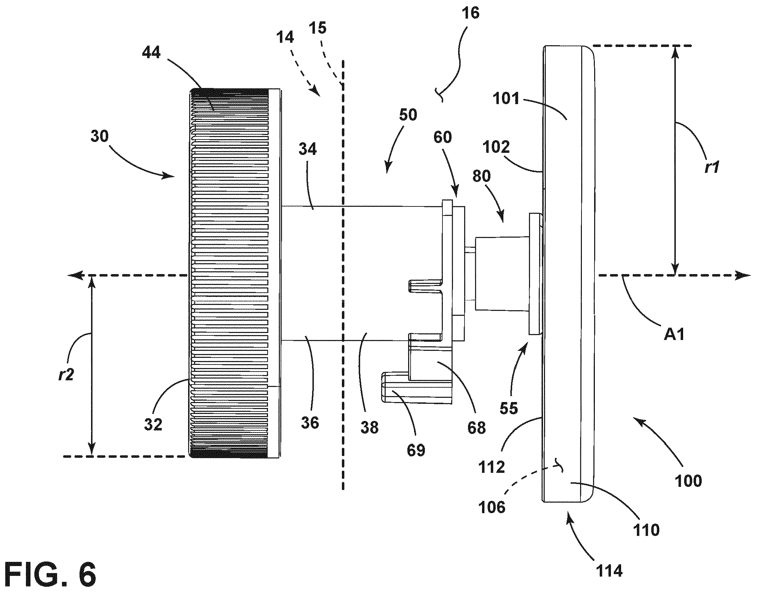

Referring now to FIGS. 5A and 5B, the weighted member 100 is shown having a substantially planar body portion 102. The body portion 102 includes the mounting apertures 104 that are centrally disposed thereon. In assembly, the mounting apertures 104 are configured to receive the mounting bosses 83 of the mounting bracket 80 to fixedly couple the weighted member 100 to the mounting bracket 80, for rotation therewith. The body portion 102 is surrounded by a channel 106, as best shown in FIG. 5B, wherein the channel 106 includes a first sidewall 108 spaced-apart from a second sidewall 110 and interconnected by an intermediate wall 112. In this way, the channel 106 defines an outwardly opening channel on the weighted member 100. As the body portion 102 of the weighted member 100 is a generally planar portion, the channel 106 defines a nonplanar portion of the weighted member 100, providing added mass at an outer perimeter 114 of the weighted member 100. Having the added mass positioned at the outer perimeter 114 of the weighted member 100 increases the moment of inertia or rotational inertia of the weighted member 100, as this added mass of the weighted member 100 is positioned furthest away from the axis of rotation A1 shown in FIGS. 4 and 6. The weighted member 100 further includes an outer diameter 101 which is generally defined by the second sidewall 110 of the channel 106.

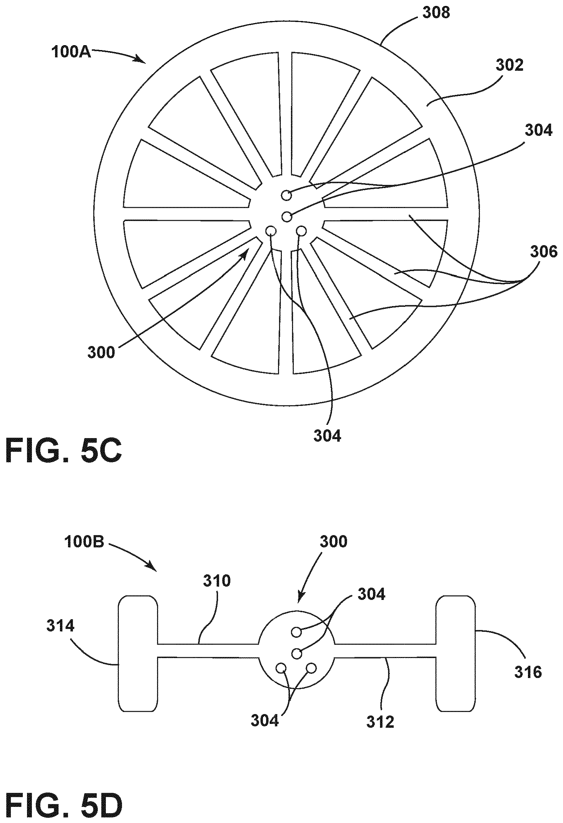

Referring now to FIG. 5C, another configuration of a weighted member 100A is shown having a central body portion 300 with mounting apertures 304 disposed therethrough for coupling the weighted member 100A to the mounting bracket 80, for rotation therewith. The weighted member 100A further includes a number of spoke members 306 outwardly extending from the central body portion 300 and interconnecting the central body portion 300 with an outer ring 302. The outer ring 302 includes an outer diameter 308.

Referring now to FIG. 5D, another configuration of a weighted member 100B is shown having a central body portion 300 with mounting apertures 304 disposed therethrough for coupling the weighted member 100B to the mounting bracket 80, for rotation therewith. The weighted member 100B further includes first and second arms 310, 312 outwardly extending from the central body portion 300. The first and second arms 310, 312 each include a weight 314, 316, respectively, that are interconnected to the central body portion 300 by the first and second arms 310, 312 and extended outwardly from the central body portion 300. Thus, as shown in FIGS. 5C and 5D, the weighted members 100A, 100B do not need to be disk-shaped weighted members, like weighted member 100 described above, but may include other configurations, so long as the weighted members are balanced and symmetrical.

Referring now to FIG. 6, the shaft assembly 50 is shown in an assembled condition and interconnecting the knob 30 and the weighted member 100. The rotational axis A1 is defined by the shaft assembly 50, such that the rotational inertia (*l*) (provided specifically by the weighted member 100) is equal to the mass (*m*) of the weighted member 100 times the square of the perpendicular distance (*r*) to the axis of rotation A1. As shown in FIGS. 4 and 6, the shaft assembly 50 interconnects the knob 30 with the weighted member 100 in a rigid manner, such that these parts rotate together when a user engages the knob 30. As noted above, the knob 30 includes an outer diameter 44 defined by the head portion 32 of the knob 30. As further noted above, the weighted member 100 includes an outer diameter 101 which is generally defined by the second sidewall 110 of the channel 106 disposed around the outer perimeter 114 of the weighted member 100. As shown in FIGS. 4 and 6, the outer diameter 44 of the knob 30 is less than the outer diameter 101 of the weighted member 100. Said differently, the outer diameter 101 of the weighted member 100 is greater than the outer diameter 44 of the knob 30. With reference to FIGS. 4 and 6, the outer diameter 101 of the weighted member 100 is twice the radius thereof as indicated at reference numeral *r1*. As further shown in FIGS. 4 and 6, the outer diameter 44 of the knob 30 is twice the radius thereof as indicated at reference numeral *r2.* In this way, the weighted member 100 provides a rotational inertia, realized by a user at the knob 30, that is consistent with the mass (*m*) of the weighted member 100, and the radius (*r1*) of the weighted member 100, both of which are features of the weighted member 100 that are greater than the mass and the radius *(r2)* of the knob 30. Thus, the present concept provides for a sensory experience for the user that includes a rotational inertia of the knob 30 (which is contemplated to be a plastic part) that is consistent with a heavier and larger knob. Again, the present concept provides this sensory feature at the externally accessible knob 30 while the weighted member 100 is concealed within the base unit 14 of the blender 10.

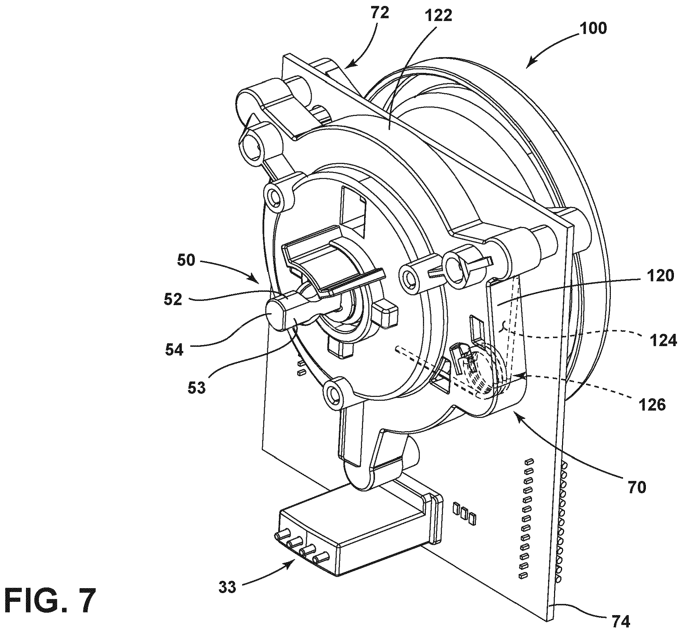

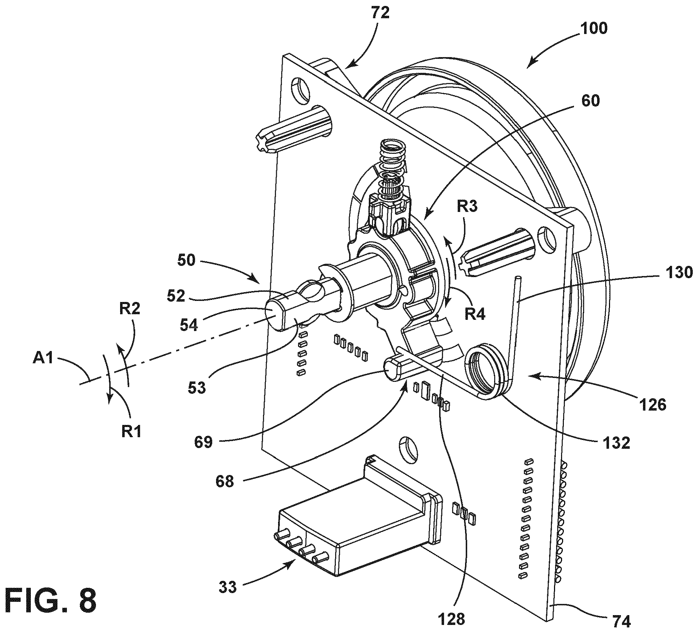

Referring now to FIG. 7, the shaft assembly 50 is shown with the weighted member 100 coupled thereto, and the front and rear support brackets 70, 72 and the PCB 74 positioned therearound. The front support bracket 70 includes a sidewall 120 and a top wall 122. Together, the sidewall 120 and the top wall 122 cooperate to partially define an interior cavity 124 for the front support bracket 70. A spring member 126 is housed within the interior cavity 124 of the front support bracket 70, as partially shown in FIG. 2. The spring member 126 is shown in phantom in FIG. 7. With reference to FIG. 8, the spring member 126 is revealed with the front support bracket 70 removed. The spring member 126 includes a first arm 128 and a second arm 130 with a coiled portion 132 disposed therebetween. As shown in FIG. 8, the switch assembly 60 is coupled to the shaft member 52 and is housed within the interior cavity 124 of the front support bracket 70, as partially shown in FIG. 2. The first arm 128 of the spring member 126 engages the engagement member 68 of the switch assembly 60 at the flange 69 thereof. The second arm 130 of the spring member 126 engages the sidewall 120 of the front support bracket 70. Thus, rotating the shaft assembly 50 in the rotational direction as indicated by arrow R2 raises the engagement member 68 in the direction as indicated by arrow R3, such that a force is applied to the spring 126. Rotation of the shaft assembly 50 in the rotational direction as indicated by arrow R2 is contemplated to be provided by a user engaging the knob 30 and rotating the knob 30 towards the left. It is contemplated that rotation of the knob 30 in the rotational direction as indicated by arrow R2 provides a pulse setting which rotates the switch assembly 60 in the direction as indicated by arrow R3 to load the spring member 126. Once the force imparted on the knob 30 is removed, the spring member 126 resiliently rotates the switch assembly downward in the direction as indicated by arrow R4 to an off position shown in FIG. 8. Thus, the spring member 126 biases the switch assembly 60 to an off or at-rest position when the switch assembly 60 is rotated to a pulse setting which selectively powers the motor 18 in an intermittent blending procedure controlled by the user.

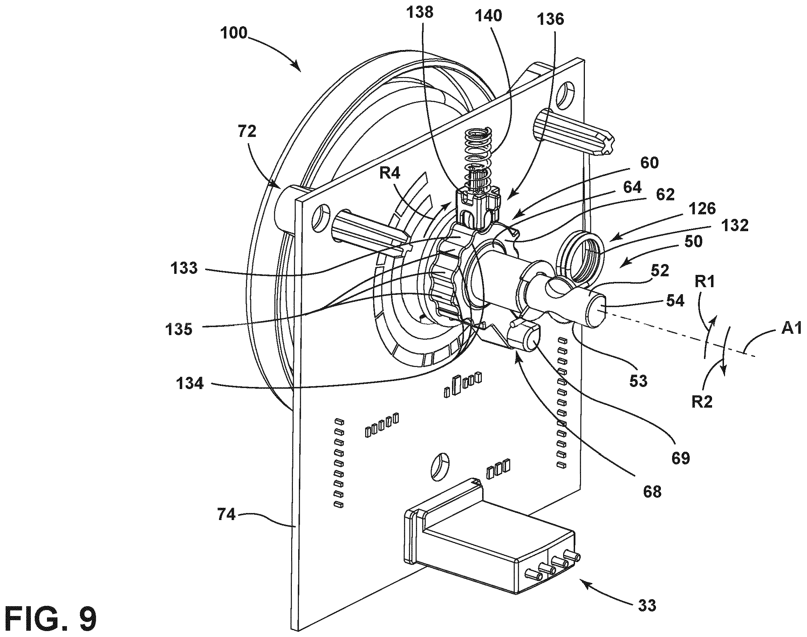

Referring now to FIG. 9, the switch assembly 60 includes an upper surface 133 having a plurality of recesses 134 and ridges 135 disposed thereon. A detent feature 136 includes a detent member 138 in the form of a ball that is biased in a vertically downward direction by a spring member 140. The detent feature 136 is housed within the interior cavity 124 (FIG. 7) of the front support bracket 70 and is positioned such that the spring member 140 thereof acts against the top wall 122 (FIG. 7) of the front support bracket 70. Thus, when a user engages the knob 30 to rotate the knob 30 to the right in the rotational direction as indicated by arrow R1, the switch assembly 60 will rotate in the direction as indicated by arrow R4 and the detent member 138 will climb over the ridges 135 to load the spring member 140 and be received in adjacent recesses 134 along the upper surface 133 of the switch assembly 60, to which the detent member 138 is biased. In this way, a user is provided with tactile feedback as a speed selection is made at the switch assembly 60. It is contemplated that the speed selection may be provided in an ascending speed level or a descending speed level as the switch assembly 60 rotates in the direction as indicated by arrow R4. Rotation of the knob 30 to the right in the direction as indicated by arrow R1 and the switch assembly 60 in the direction as indicated by arrow R4 does not load the spring member 126, such that spring member 126 does not bias the switch assembly 60 back to the at-rest or off position shown in FIG. 8 when a speed selection is made by a user. As such, a motor speed may be selected by a user, and the motor 18 may remain at the selected motor speed until the user returns the switch assembly 60 to a lower speed selection or the at-rest or off position by rotating the knob 30 in the direction as indicated by arrow R2 to decrease the speed or turn off the motor.

In one aspect, the above-referenced blender 10 can include a controller in the form of a microprocessor, or the like, that can include programming to operate the blender 10, including based on user inputs received through the user interface 20 discussed above. In various aspects, the programming can include either firmware or software that is specifically adapted to operate the motor 18 via a current received from the battery 22. In one example, the programming can be adapted to maintain an acceptably low temperature of the battery 22 and/or the motor 18 in a proactive manner based on the current drawn by the motor 18. In the illustrated example of the blender 10, the knob 30 is provided to operate the motor 18 at different speeds (e.g., high, medium, and low). As can be appreciated, the operation of the motor 18 at these varying speeds will result in correspondingly varying current draws. In one example, low speed operation may result in a current draw of about 15 amps, with mid-speed operation having a current draw of 20 amps, and high speed operation drawing a current of 40 amps. In this manner, operation of the motor 18 at the high speed setting will result in faster heating of the motor 18 and/or the battery 22, such that a timer can be implemented that only allows operation at a speed drawing 40 amps for a certain amount of time to prevent excessive heating. In this manner, the controller programming can be such that, when the user fully rotates the knob 30 to the right, the motor 18 is operated at the full high speed for a predetermined interval (e.g., about 20 seconds, or in some examples about 10 seconds) before the speed is reduced (e.g., by between about 5% and 10% to reduce the heating effect of such operation, while still operating the motor 18 at a speed that may be perceived as acceptably high by the user. In this manner, the lower speed operations may allow for longer intervals (e.g., at least about 40 seconds) before a similar reduction in speed is implemented. The software can also implement a cool-down time interval requirement, such that the overall timer is maintained during rapid pulses when the knob 30 is intermittently turned to the left.

Referring now to FIG. 10, the lid assembly 26 is shown exploded away from the open top 28 of the jar assembly 12 to thereby provide access to the inner cavity 24 of the jar assembly 12. The lid assembly 26 includes a body portion 150 having a head portion 151 with a centrally disposed aperture 152. A cap member 154 is removably received on the centrally disposed aperture 152 of the lid assembly 26. The lid assembly 26 further includes a handle 156 which extends outwardly from the head portion 151 and is contemplated to be engaged by a user to remove the lid assembly 26 from the open top 28 of the jar assembly 12. The lid assembly 26 further includes a stem portion 160 extending downwardly from the head portion 151. The stem portion 160 includes a seal member 170 disposed thereon. The seal member 170 is contemplated to be a removable seal member with respect to the lid assembly 26. In use, the seal member 170 is configured to seal against an interior surface 25 of the inner cavity 24 of the jar assembly 12 to keep food items within the jar assembly 12 during a blending procedure.

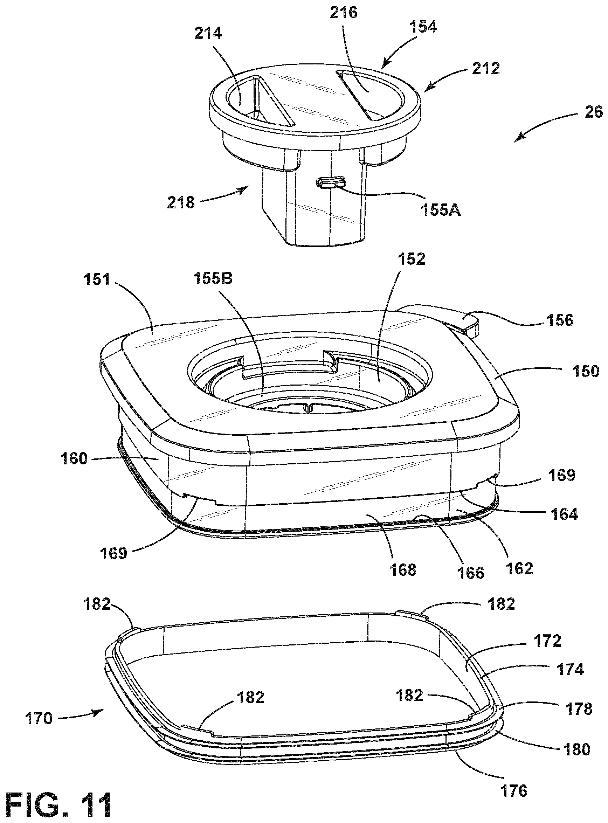

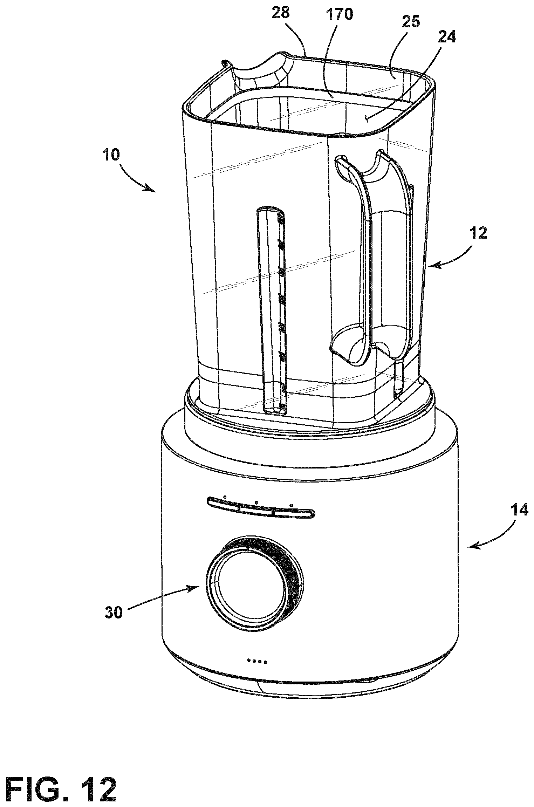

Referring now to FIG. 11, the lid assembly 26 is shown with the cap member 154 removed from the centrally disposed aperture 152. The cap member 154 includes a head portion 212 having recesses 214, 216 disposed thereon which are contemplated to be engaged by a user to twist the cap member 154 into engagement with the body portion 150 of the lid assembly 26. The cap member 154 includes a number of interlock features 155A that cooperate with reciprocal interlock features 155B disposed within the body portion 150 of the lid assembly 26 at the centrally disposed aperture 152 to releasably retain the cap member 154 in place in a twist-lock configuration, as further described below. A cup portion 218 extends outwardly from the head portion 212 of the cap member 154 and may be used as a measuring cup, as further described below. Thus, the centrally disposed aperture 152 of the body portion 150 of the lid assembly 26 provides access to the inner cavity 24 of the jar assembly 12 when the cap member 154 is removed therefrom. As further shown in FIG. 11, the stem portion 160 of the lid assembly 26 includes a receiving channel 162 that is circumferentially disposed around an entirety of the stem portion 160. As such, the receiving channel 162 defines a recess provided around the stem portion 160. The receiving channel 162 is an outwardly opening receiving channel that may include a generally C-shaped structure having an upper edge 164, a lower edge 166 and an intermediate portion 168 interconnecting the upper edge 164 and the lower edge 166. The receiving channel 162 further includes a plurality of locating recesses 169 that upwardly extend from the upper edge 164 thereof. As further shown in FIG. 11, the seal member 170 includes a body portion 172 having an upper edge 174 and a lower edge 176. Upper and lower sweep members 178, 180 outwardly extend from the body portion 172 of the seal member 170. The upper and lower sweep members 178, 180 are configured to engage the interior surface 25 of the inner cavity 24 as received within the inner cavity 24 of the jar assembly 12. This configuration is shown in FIG. 12, wherein the seal member 170 is positioned within the inner cavity 24 of the jar assembly 12. In the configuration shown in FIG. 12, it is contemplated that the upper and lower sweep members 178, 180 are engaged with the interior surface 25 of the inner cavity 24 of the jar assembly 12.

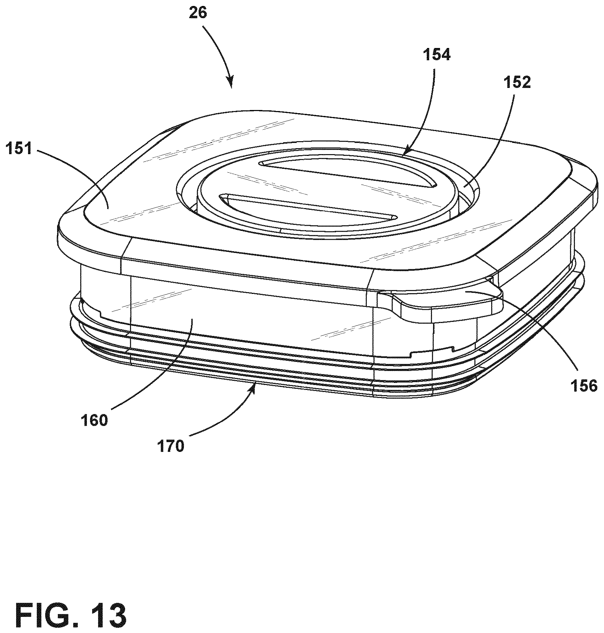

The lid assembly 26 and the jar assembly 12 may be comprised of a clear or transparent polymeric material, as shown in FIGS. 10, 11 and 13. The seal member 170 may be comprised of a silicone material, such that the upper and lower sweep members 178, 180 are contemplated to be flexibly resilient members. As a removable member, the seal member 170 can be removed from the stem portion 160 of the lid assembly 26, such that the seal member 170 can be washed, and so can the receiving channel 162 of the lid assembly 26. Being a flexibly resilient member, the seal member 170 can be stretched to move into the receiving channel 162 over the lower edge 166 of the receiving channel 162. As shown in FIG. 11, the seal member 170 includes a plurality of locating features 182 that upwardly extend from the upper edge 174 of the body portion 172 of the seal member 170. In the configuration shown in FIG. 11, it is contemplated that the upwardly extending locating features 182 are received in the reciprocal locating recesses 169 of the receiving channel 162 as the seal member 170 is positioned therein. As shown in the embodiment of FIG. 11, the seal member includes four upwardly extending locating features 182 that are contemplated to be received in four locating recesses 169 of the receiving channel 162 disposed at corner portions of the receiving channel 162. However, more or fewer locating features may be provided on the seal member 170.

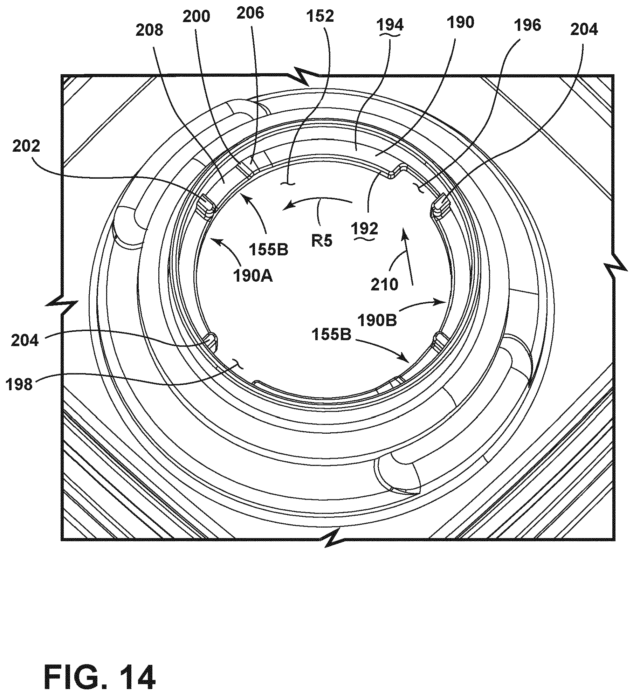

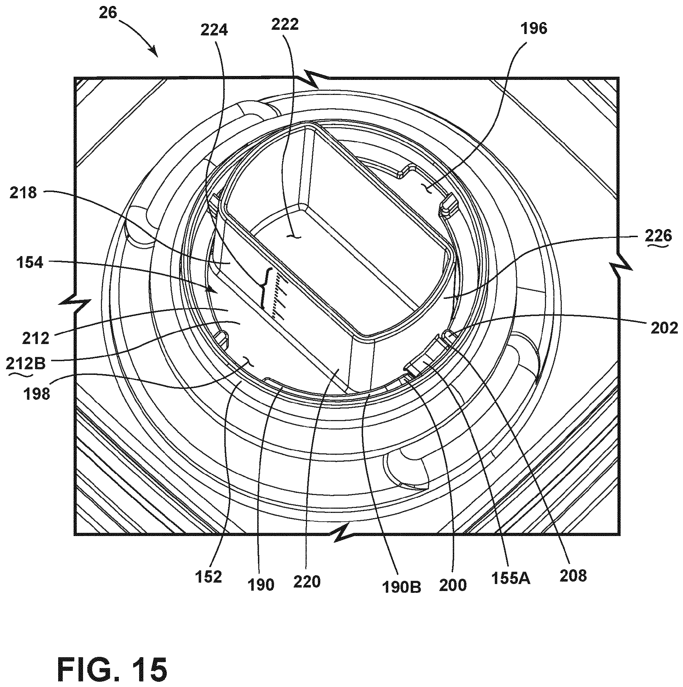

Referring now to FIG. 14, the body portion 150 of the lid assembly 26 is shown from a bottom perspective view. The centrally disposed aperture 152 has the cap member 154 removed therefrom to reveal a rim portion 190. The rim portion 190 includes upper and lower surfaces 192, 194. Further, the rim portion 190 includes a first portion 190A and a second portion 190B with access slots 196, 198 positioned therebetween. The first and second portions 190A, 190B are identical to one another, such that the description of the first portion 190A provided herein will also describe the second portion 190B. The first portion 190A of the rim portion 190 includes a first engagement member 200 spaced-apart from a second engagement member 202 which is further spaced-apart from a third engagement member 204. The second and third engagement members 202 and 204 are substantially similar to one another and outwardly extend from the lower surface 194 of the rim portion 190. The first engagement member 200 also outwardly extends from the lower surface 194 of the rim portion 190 and includes an angled leading portion 206 that acts as an introductory ramp portion for one of the interlock features 155A of the cap member 154. Positioned between the first engagement member 200 and the second engagement member 202 is a cradle portion 208, wherein an interlock feature 155A of the cap member 154 is received when the cap member 154 is in a locked position on the body portion 150 of the lid assembly 26, as shown in FIG. 15. Thus, when the cap member 154 is coupled to the body portion 150 of the lid assembly 26, the cap member 154 is vertically received at the centrally disposed aperture 152 of the body portion 150 of the lid assembly 26 in the direction as indicated by arrow 210. In engaging the body portion 150 of the lid assembly 26, the interlock feature 155A of the cap member 154 will be received through the access slot 196 to then engage the lower surface 194 of the rim portion 190. Once received through the access slot 196, the interlock feature 155A of the cap member 154 will rotate in the direction as indicated by arrow R5 until it reaches the angled leading portion 206 of the first engagement member 200. As a user continues the rotation of the cap member 154, the interlock feature 155A will pass over the first engagement member 200 and stop rotational movement at the second engagement member 202. When rotation of the interlock feature 155A is stopped by the second engagement member 202, the interlock features 155A is received in the cradle portion 208 of the rim portion 190, as shown in FIG. 15. When the interlock feature 155A is received through the access slot 196, rotation in an opposite direction relative to the rotational direction R5 noted above is inhibited by the third engagement member 204 of the second portion 190B of the rim portion 190. In this way, the features described above provided on the rim portion 190 define the interlock features 155B of the body portion 150 of the lid assembly 26.

Referring now to FIG. 15, the cap member 154 is shown received on the body portion 150 of the lid assembly 26, such that the cup portion 218 is positioned through the centrally disposed aperture 152. The cup portion 218 of the cap member 154 includes a sidewall 220 extending outwardly from a lower surface 212B of the head portion 212. The sidewall 220 surrounds a receiving well 222 which can be used by a user to measure ingredients when the cap member 154 is removed from the body portion 150 of the lid assembly 26. The cup portion 218 includes ingredient measuring indicia 224 positioned on and visible on an outer surface 226 of the sidewall 220 for use in measuring ingredients received in the receiving well 222. The ingredient measuring indicia 224 may also be positioned on an inner surface of the sidewall 220. As used herein, the term "ingredient measuring indicia" describes visible markings on the cup portion 218 that indicate a volume of ingredients received within the receiving well 222. Such markings may include cup, tablespoon, teaspoon or any other volume metric suitable for measuring ingredients to be used in the blender 10. In FIG. 15, the interlock feature 155A of the cap member 154 is shown outwardly extending from the outer surface 226 of the sidewall 220 of the cup portion 218. In FIG. 15, the interlock feature 155A is shown as being received within the cradle portion 208 of the rim portion 190 of the body portion 150 of the lid assembly 26, such that the cap member 154 is shown in a locked position in FIG. 15. Rotating the cap member 154 such that the interlock features 155A thereof align with the access slots 196, 198 will rotate the cap member 154 to an unlocked position, wherein the cap member 154 can be released from the body portion 150 of the lid assembly 26. Thus, the cap member 154 is operable between locked and unlocked positions relative to the body portion 150 of the lid assembly 26 due to the reciprocal interlock features 155A and 155B provided therebetween.

A seal member is removably received in the receiving channel. The seal member includes a body portion having at least one outwardly extending sweep member positioned thereon.

According to one aspect of the present disclosure, a lid assembly includes a body portion with a head portion and a stem portion downwardly extending from the head portion. A receiving channel is circumferentially disposed around the stem portion. An aperture is disposed through the head portion. A cap member is removably received on the aperture. A seal member is removably received in the receiving channel. The seal member includes a body portion including at least one sweep member outwardly extending therefrom.

According to another aspect, the receiving channel includes an upper edge, a lower edge and an intermediate portion interconnecting the upper edge and the lower edge.

According to another aspect, the receiving channel includes a plurality of locating recesses that upwardly extend from the upper edge thereof.

According to another aspect, the body portion of the seal member includes an upper edge, and the body portion of the seal member includes a plurality of locating features that upwardly extend from the upper edge of the body portion of the seal member.

According to another aspect, each locating feature of the plurality of locating features is received in reciprocal locating recesses of the plurality of locating recesses of the receiving channel when the seal member is received in the receiving channel.

According to another aspect, the plurality of locating features includes four locating features, and the plurality of locating recesses includes four locating recesses disposed at corner portions of the receiving channel.

According to another aspect, the at least one sweep member includes upper and lower sweep members.

According to another aspect of the present disclosure, a lid assembly includes a body portion with an aperture disposed therethrough. The aperture is defined by a rim portion. A cap member is removably received on the aperture. The cap member includes a head portion and a sidewall outwardly extending from a lower surface of the head portion to define a receiving well.

According to another aspect, the cap member includes at least one interlock feature outwardly extending from an outer surface of the sidewall.

According to another aspect, the body portion includes at least one interlock feature disposed along the rim portion thereof.

According to another aspect, the at least one interlock feature of the body portion includes at least one access slot disposed through the rim portion, and the at least one interlock feature of the body portion includes first and second engagement members outwardly extending from a lower surface of the rim portion.

According to another aspect, the first and second engagement members are spaced-apart from one another to define a cradle portion therebetween.

According to another aspect, the at least one interlock feature of the cap member is received in the cradle portion when the cap member is in a locked position on the body portion.

According to another aspect, the first engagement member includes an angled leading portion.

According to another aspect, the sidewall of the cap member includes ingredient measuring indicia disposed thereon.

According to yet another aspect of the present disclosure, a lid assembly includes a body portion with a head portion including an aperture disposed therethrough and a stem portion outwardly extending from the head portion. A cap member is removably received on the aperture. The cap member includes a head portion and a cup portion outwardly extending from the head portion of the cap member.

According to another aspect, the stem portion includes a receiving channel circumferentially disposed therearound.

According to another aspect, a seal member is removably received in the receiving channel. The seal member includes a body portion having at least one sweep member outwardly extending therefrom.

According to another aspect, the body portion and cap member are comprised of a transparent material.

According to another aspect, the aperture includes a rim portion having an interlock feature and the cap member includes a reciprocal interlock feature to the interlock feature of the rim portion. The cap member is operable between locked and unlocked positions relative to the body portion.

According to one aspect of the present disclosure, a lid assembly includes a body portion having an aperture disposed therethrough. The aperture is defined by a rim portion. A cap member is removably received on the aperture between locked and unlocked positions. The cap member includes a head portion and a sidewall outwardly extending from a lower surface of the head portion to define a receiving well.

According to another aspect, the cap member includes at least one interlock feature outwardly extending from an outer surface of the sidewall.

According to another aspect, the body portion includes at least one interlock feature disposed along the rim portion thereof.

According to another aspect, the at least one interlock feature of the body portion includes at least one access slot disposed through the rim portion.

According to another aspect, the at least one interlock feature of the body portion further includes first and second engagement members outwardly extending from a lower surface of the rim portion.

According to another aspect, the first and second engagement members are spaced-apart from one another to define a cradle portion therebetween.

According to another aspect, the at least one interlock feature of the cap member is received in the cradle portion when the cap member is in the locked position on the body portion.

According to another aspect, the first engagement member includes an angled leading portion.

According to another aspect, the sidewall of the cap member includes ingredient measuring indicia disposed thereon.

According to another aspect, the body portion includes a head portion and a stem portion outwardly extending from the head portion.

According to another aspect, the stem portion includes a receiving channel circumferentially disposed therearound. The receiving channel is an outwardly opening receiving channel having an upper edge, a lower edge and an intermediate portion interconnecting the upper edge and the lower edge.

According to another aspect, a seal member is removably received in the receiving channel. The seal member includes a body portion having at least one sweep member outwardly extending therefrom.

According to another aspect, the receiving channel includes a plurality of locating recesses upwardly extending from the upper edge.

According to another aspect, the body portion of the seal member includes an upper edge and a plurality of locating features that upwardly extend from the upper edge of the body portion of the seal member. Each locating feature of the plurality of locating features is received in reciprocal locating recesses of the plurality of locating recesses of the receiving channel when the seal member is received in the receiving channel.

According to another aspect, the body portion and cap member are comprised of a transparent material.

## Claims

1. A lid assembly (26), comprising:
a body portion (150) having an aperture (152) disposed therethrough, wherein the aperture (152) is defined by a rim portion (190), the body portion (150) includes a head portion (151) and a stem portion (160) outwardly extending from the head portion (151),
a cap member (154) removably received on the aperture (152) between locked and unlocked positions, wherein the cap member (154) includes a head portion (212) and a sidewall (220) outwardly extending from a lower surface (212B) of the head portion (212) to define a receiving well (222), and
a seal member (170) including a seal member body portion (172) having at least one sweep member (178) outwardly extending therefrom,
wherein a cup portion (218) extends outwardly from the head portion (212) of the cap member (154) and is configured to be used as a measuring cup,
wherein the cup portion (218) includes ingredient measuring indicia (224) positioned on and visible on the sidewall (220) for use in measuring ingredients received in the receiving well (222),
wherein the ingredient measuring indicia (224) are visible markings on the cup portion (218) that indicate a volume of ingredients received within the receiving well (222),
wherein the stem portion (160) includes a receiving channel (162) circumferentially disposed therearound, the receiving channel (162) being an outwardly opening receiving channel having an upper edge (164), a lower edge (166) and an intermediate portion (168) interconnecting the upper edge (164) and the lower edge (166),
the lid assembly (26) being **characterized in that** the seal member (170) is removably received in the receiving channel (162).

2. The lid assembly (26) of claim 1, wherein the cap member (154) includes at least one interlock feature (155A) outwardly extending from an outer surface (226) of the sidewall (220).

3. The lid assembly (26) of any one of claims 1-2, wherein the body portion (150) includes at least one interlock feature (155B) disposed along the rim portion (190) thereof.

4. The lid assembly (26) of claim 3, wherein the at least one interlock feature (155B) of the body portion (150) includes at least one access slot (196) disposed through the rim portion (190).

5. The lid assembly (26) of any one of claims 3-4, wherein the at least one interlock feature (155B) of the body portion (150) further includes first and second engagement members (200, 202) outwardly extending from a lower surface (194) of the rim portion (190).

6. The lid assembly (26) of claim 5, wherein the first and second engagement members (200, 202) are spaced-apart from one another to define a cradle portion (208) therebetween.

7. The lid assembly (26) of claim 6, wherein the at least one interlock feature (155A) of the cap member (154) is received in the cradle portion (208) when the cap member (154) is in the locked position on the body portion (150).

8. The lid assembly (26) of any one of claims 5-7, wherein the first engagement member (200) includes an angled leading portion (206).

9. The lid assembly (26) of any one of claims 1-8, wherein the receiving channel (162) includes a plurality of locating recesses (169) upwardly extending from the upper edge (164).

10. The lid assembly (26) of claim 9, wherein the seal member body portion (172) includes an upper edge (174), and further wherein the seal member body portion (172) includes a plurality of locating features (182) that upwardly extend from the upper edge (174) of the seal member body portion (172), and further wherein each locating feature (182) of the plurality of locating features (182) is received in reciprocal locating recesses (169) of the plurality of locating recesses (169) of the receiving channel (162) when the seal member (170) is received in the receiving channel (162).

11. The lid assembly (26) of any one of claims 1-10, wherein the body portion (150) and cap member (154) are comprised of a transparent material.

## Patentansprüche

1. Deckelbaugruppe (26), umfassend:
einen Körperbereich (150) mit einer dadurch hindurchgehend angeordneten Öffnung (152), wobei die Öffnung (152) durch einen Randbereich (190) definiert ist, der Körperbereich (150) einen Kopfbereich (151) und einen sich vom Kopfbereich (151) nach außen erstreckenden Schaftbereich (160) aufweist,
ein Kappenbauteil (154), das abnehmbar an der Öffnung (152) zwischen einer verriegelten und einer entriegelten Position aufgenommen ist, wobei das Kappenbauteil (154) einen Kopfbereich (212) und eine Seitenwand (220) aufweist, die sich von einer unteren Fläche (212B) des Kopfbereichs (212) nach außen erstreckt, um eine Aufnahmeschale (222) zu definieren, und
ein Dichtungsbauteil (170), das einen Dichtungsbauteil-Körperbereich (172) mit mindestens einem sich davon nach außen erstreckenden Wischbauteil (178) aufweist,
wobei sich ein Becherbereich (218) vom Kopfbereich (212) des Kappenbauteils (154) nach außen erstreckt und ausgestaltet ist, um als Messbecher verwendet zu werden,
wobei der Becherbereich (218) eine Zutaten-Messmarkierungen (224) aufweist, die an der Seitenwand (220) vorgesehen und an dieser sichtbar ist, um zum Messen von in der Aufnahmeschale (222) aufgenommenen Zutaten verwendet zu werden,
wobei die Zutaten-Messmarkierung (224) sichtbare Markierungen auf dem Becherbereich (218) sind, die ein Volumen der in der Aufnahmeschale (222) aufgenommenen Zutaten anzeigen,
wobei der Schaftbereich (160) einen in Umfangsrichtung umlaufend angeordneten Aufnahmekanal (162) aufweist, wobei der Aufnahmekanal (162) ein nach außen offener Aufnahmekanal ist, der eine obere Kante (164), eine untere Kante (166) und einen zwischenliegenden Bereich (168) aufweist, der die obere Kante (164) und die untere Kante (166) miteinander verbindet,
wobei die Deckelbaugruppe (26) **dadurch gekennzeichnet ist, dass** das Dichtungsbauteil (170) lösbar in dem Aufnahmekanal (162) aufgenommen ist.

2. Deckelbaugruppe (26) nach Anspruch 1, wobei das Kappenbauteil (154) mindestens ein Verriegelungselement (155A) aufweist, das sich von einer äußeren Fläche (226) der Seitenwand (220) nach außen erstreckt.

3. Deckelbaugruppe (26) nach einem der Ansprüche 1-2, wobei der Körperbereich (150) mindestens ein Verriegelungsmerkmal (155B) aufweist, das entlang seines Randabschnitts (190) angeordnet ist.

4. Deckelbaugruppe (26) nach Anspruch 3, wobei das mindestens eine Verriegelungsmerkmal (155B) des Körperbereichs (150) mindestens einen Zugangsschlitz (196) umfasst, der durch den Randbereich (190) hindurch angeordnet ist.

5. Deckelbaugruppe (26) nach einem der Ansprüche 3-4, wobei das mindestens eine Verriegelungsmerkmal (155B) des Körperbereichs (150) ferner ein erstes und ein zweites Eingriffsbauteil (200, 202) umfasst, die sich von einer unteren Fläche (194) des Randbereichs (190) nach außen erstrecken.

6. Deckelbaugruppe (26) nach Anspruch 5, wobei das erste und das zweite Eingriffsbauteil (200, 202) voneinander beabstandet sind, um dazwischen einen Aufnahmebereich (208) zu bilden.

7. Deckelbaugruppe (26) nach Anspruch 6, wobei das mindestens eine Verriegelungsmerkmal (155A) des Kappenbauteils (154) in dem Aufnahmebereich (208) aufgenommen ist, wenn sich das Kappenbauteil (154) in der verriegelten Position an dem Körperbereich (150) befindet.

8. Deckelbaugruppe (26) nach einem der Ansprüche 5-7, wobei das erste Eingriffsbauteil (200) einen abgewinkelten vorderen Bereich (206) aufweist.

9. Deckelbaugruppe (26) nach einem der Ansprüche 1-8, wobei der Aufnahmekanal (162) eine Mehrzahl von Positionierungsausnehmungen (169) aufweist, die sich von der oberen Kante (164) nach oben erstrecken.

10. Deckelbaugruppe (26) nach Anspruch 9, wobei der Dichtungsbauteil-Körperbereich (172) eine obere Kante (174) aufweist, und wobei der Dichtungsbauteil-Körperbereich (172) außerdem eine Mehrzahl von Positionierungsmerkmalen (182) aufweist, die sich von der oberen Kante (174) des Dichtungsbauteil-Körperbereichs (172) nach oben erstrecken, und wobei außerdem jedes Positionierungsmerkmal (182) der Mehrzahl von Positionierungsmerkmalen (182) in entsprechenden Positionierungsausnehmungen (169) der Mehrzahl von Positionierungsausnehmungen (169) des Aufnahmekanals (162) aufgenommen ist, wenn das Dichtungsbauteil (170) in dem Aufnahmekanal (162) aufgenommen ist.

11. Deckelbaugruppe (26) nach einem der Ansprüche 1-10, wobei der Körperbereich (150) und das Kappenbauteil (154) aus einem transparenten Material bestehen.

## Revendications

1. Ensemble formant couvercle (26), comprenant :
une portion corps (150) ayant une ouverture (152) disposée à travers, dans lequel l'ouverture (152) est définie par une portion formant rebord (190), la portion corps (150) inclut une portion tête (151) et une portion tige (160) s'étendant vers l'extérieur depuis la portion tête (151),
un élément formant capuchon (154) reçu de manière amovible sur l'ouverture (152) entre des positions verrouillée et déverrouillée, dans lequel l'élément formant capuchon (154) inclut une portion tête (212) et une paroi latérale (220) s'étendant vers l'extérieur depuis une surface inférieure (212B) de la portion tête (212) pour définir un puits de réception (222), et
un élément d'étanchéité (170) incluant une portion corps d'élément d'étanchéité (172) ayant au moins un élément de balayage (178) s'étendant vers l'extérieur depuis celui-ci,
dans lequel une portion formant tasse (218) s'étend vers l'extérieur depuis la portion tête (212) de l'élément formant capuchon (154) et est configurée pour être utilisée comme tasse de mesure,
dans lequel la portion formant tasse (218) inclut des indices de mesure d'ingrédient (224) positionnés, et visibles, sur la paroi latérale (220) pour l'utilisation dans une mesure d'ingrédients reçus dans le puits de réception (222),
dans lequel les indices de mesure d'ingrédient (224) sont des marques visibles sur la portion formant tasse (218) qui indiquent un volume des ingrédients reçus à l'intérieur du puits de réception (222),
dans lequel la portion tige (160) inclut un canal de réception (162) disposé circonférentiellement autour de celui-ci, le canal de réception (162) étant un canal de réception à ouverture s'étendant vers l'extérieur ayant un bord supérieur (164), un bord inférieur (166) et une portion intermédiaire (168) interreliant le bord supérieur (164) et le bord inférieur (166),
l'ensemble formant couvercle (26) **étant caractérisé en ce que** l'élément d'étanchéité (170) est reçu de manière amovible dans le canal de réception (162).

2. Ensemble formant couvercle (26) selon la revendication 1, dans lequel l'élément formant capuchon (154) inclut au moins un élément d'interverrouillage (155A) s'étendant vers l'extérieur depuis une surface externe (226) de la paroi latérale (220).

3. Ensemble formant couvercle (26) selon l'une quelconque des revendications 1 à 2, dans lequel la portion corps (150) inclut au moins un élément d'interverrouillage (155B) disposé le long de sa portion formant rebord (190).

4. Ensemble formant couvercle (26) selon la revendication 3, dans lequel le au moins un élément d'interverrouillage (155B) de la portion corps (150) inclut au moins une fente d'accès (196) disposée à travers la portion formant rebord (190).

5. Ensemble formant couvercle (26) selon l'une quelconque des revendications 3 à 4, dans lequel le au moins un élément d'interverrouillage (155B) de la portion corps (150) inclut en outre un premier et un second élément d'engagement (200, 202) s'étendant vers l'extérieur depuis une surface inférieure (194) de la portion formant rebord (190).

6. Ensemble formant couvercle (26) selon la revendication 5, dans lequel le premier et le second élément d'engagement (200, 202) sont espacés à l'écart l'un de l'autre pour définir une portion formant berceau (208) entre eux.

7. Ensemble formant couvercle (26) selon la revendication 6, dans lequel le au moins un élément d'interverrouillage (155A) de l'élément formant capuchon (154) est reçu dans la portion formant berceau (208) lorsque l'élément formant capuchon (154) se trouve dans la position verrouillée sur la portion corps (150).

8. Ensemble formant couvercle (26) selon l'une quelconque des revendications 5 à 7, dans lequel le premier élément d'engagement (200) inclut une portion principale angulaire (206).

9. Ensemble formant couvercle (26) selon l'une quelconque des revendications 1 à 8, dans lequel le canal de réception (162) inclut une pluralité de renfoncements de localisation (169) s'étendant vers le haut depuis le bord supérieur (164).

10. Ensemble formant couvercle (26) selon la revendication 9, dans lequel la portion corps d'élément d'étanchéité (172) inclut un bord supérieur (174), et en outre dans lequel la portion corps d'élément d'étanchéité (172) inclut une pluralité d'éléments de localisation (182) qui s'étendent vers le haut depuis le bord supérieur (174) de la portion corps d'élément d'étanchéité (172), et en outre dans lequel chaque élément de localisation (182) de la pluralité d'éléments de localisation (182) est reçu dans des renfoncements de localisation (169) réciproques de la pluralité de renfoncements de localisation (169) du canal de réception (162) lorsque l'élément d'étanchéité (170) est reçu dans le canal de réception (162).

11. Ensemble formant couvercle (26) selon l'une quelconque des revendications 1 à 10, dans lequel la portion corps (150) et l'élément formant capuchon (154) sont composés d'un matériau transparent.
